# EUROPEAN PATENT APPLICATION

(11) **EP 2 458 603 A1**
(43) Date of publication of application: **30.05.2012**
(21) Application number: 10802351.6
(22) Date of filing: 23.07.2010
(51) Int. Cl.: H01G 4/08

(54) **GLASS FILM FOR CAPACITOR**

(30) Priority: 23.07.2009 JP 2009171734
(71) Applicant: Nippon Electric Glass Co., Ltd., Otsu-shi Shiga 520-8639 (JP)
(72) Inventor: MURATA Takashi, Otsu-shi Shiga 520-8639 (JP)
(74) Representative: Tetzner, Michael
(86) International application number: PCT/JP2010/062456
(87) International publication number: WO 2011/010731

(57) **Abstract**

A glass film for a capacitor has a thickness of 50 µm or less and an average surface roughness Ra of 50 Ǻ or less. The glass film for a capacitor also has a dielectric constant at a frequency of 1 MHz of 5 or more and a dielectric dissipation factor at a frequency of 1 MHz of 0.05 or less.

## Description

### Technical Field

The present invention relates to a glass film for a capacitor, and more specifically, to a glass film for a capacitor having a small film thickness and a high dielectric constant.

### Background Art

An inverter is used in an electric vehicle (EV) or a hybrid electric vehicle (HEV) in order to drive an AC motor by converting a DC power to an AC power in a battery. Further, a DC power supply circuit (converter, battery, and the like) connected to a switching circuit of the inverter is generally called a DC link, and the DC power supply voltage of the DC link is called a DC link voltage. To the DC link of the inverter, a high-capacity capacitor called a DC link capacitor is connected in parallel with a DC power supply, and compensates instantaneous load changes caused by the switching circuit.

The capacitor used for this application is required to have the following features.
1) A large amount of energy can be released and stored instantaneously in order to compensate instantaneous load changes.
2) The temperature dependence of a dielectric constant is small in order to prevent the situation in that a circuit is not properly activated due to temperature change.

### Citation List

### Patent Document

Patent Document 1: JP 2004-524796 A

### Summary of Invention

### Technical Problems

A ceramic capacitor using BaTiO₃ is the mainstream now as a capacitor used for this application. However, the ceramic capacitor involves a problem in that insulation breakdown occurs when a high Voltage is applied. This is because, when a convex portion of a crystal grain existing in the ceramic capacitor comes into contact with an electrode and a high Voltage is applied to the contact portion, electric field concentration occurs, which is liable to cause a short circuit.

Further, it is known that, in the ceramic capacitor using BaTiO₃, the temperature dependence of a dielectric constant is large, and hence the dielectric constant is liable to vary by virtue of temperature change. Thus, in order to lower the temperature dependence of the dielectric constant, studies have been made on doping Mg, Mn, or the like in BaTiO₃. However, doping Mg, Mn, or the like in BaTiO₃ relatively induces a charge of -2 in the crystal lattice of BaTiO₃, thereby causing oxygen deficiency in BaTiO₃ in some cases. This oxygen deficiency may induce the lowering of the dielectric constant under a DC voltage. Thus, in a ceramic capacitor using BaTiO₃, it has been difficult to lower the temperature dependence of a dielectric constant while increasing the dielectric constant.

Further, a capacitor needs to have a large area per unit volume in order to store a large amount of energy. However, conventional ceramic materials have had a difficulty in providing a large area, causing the increase of the production cost of a capacitor. Further, if ceramic materials are laminated, a large area can be provided, but this method makes production steps of a capacitor cumbersome, also causing the increase of its production cost.

Thus, the present invention has a technical object to provide a material which is capable of releasing and storing a large amount of energy instantaneously and in which the temperature dependence of a dielectric constant is small, thereby improving the characteristics of a capacitor.

### Solutions to Problems

The inventor of the present invention has made intensive efforts and consequently found that the above-mentioned technical object can be achieved by using, for a capacitor, a glass film having a smaller thickness and having a good surface precision. Thus, the finding is proposed as the present invention. That is, a glass film for a capacitor according to the present invention has a thickness of 50 µm or less and an average surface roughness Ra of 50 Ǻ or less. Here, the term "average surface roughness Ra" refers to a value obtained by measurement using a method in accordance with JIS B0601:2001.

When a glass film has a thickness of 50 µm or less, the area per unit volume of the glass film becomes larger, and hence a large amount of energy is easily stored in the capacitor. Further, when a glass film having an average surface roughness Ra of 50 Ǻ or less, the voltage at which insulation breakdown occurs can be increased, and hence a large amount of energy is easily stored in the capacitor.

Oxygen deficiency does not easily occur in glass, and hence the temperature dependence of the dielectric constant can be made smaller without causing the lowering of the dielectric constant. Thus, when a glass film is used in a capacitor, it is possible to prevent effectively the situation in that a circuit is not properly activated by virtue of temperature change.

The glass film for a capacitor according to the present invention preferably comprises alkali metal oxides (the total of Li₂O, Na₂O, and K₂O) at a content of 15 mass% or less. The inventor of the present invention has made intensive surveys, and consequently, the inventor has found that the voltage at which insulation breakdown occurs is remarkably different between alkali-free glass and alkali-containing glass, and when alkali-free glass is used in a capacitor, the voltage at which insulation breakdown occurs can be remarkably increased, and hence the capacitor can store a large amount of energy. Here, the phrase "substantially free of alkali metal oxides" refers to the case that the content of alkali metal oxides is 1000 ppm or less in a glass composition.

The glass film for a capacitor according to the present invention preferably has a dielectric constant at a frequency of 1 MHz of 5 or more. Thus, a capacitor using the above-mentioned glass film can store a large amount of energy. Here, the phrase "dielectric constant at a frequency of 1 MHz" refers to a value obtained by measurement at a temperature of 25°C by a method in accordance with ASTM D150.

The glass film for a capacitor according to the present invention preferably has a dielectric dissipation factor at a frequency of 1 MHz of 0.05 or less. Thus, the voltage at which insulation breakdown occurs hardly lowers even when a high voltage is applied. Here, the phrase "dielectric dissipation factor at a frequency of 1 MHz" refers to a value obtained by measurement at a temperature of 25°C by a method in accordance with ASTM D150.

The glass film for a capacitor according to the present invention preferably has a volume resistivity at 350°C of 10⁸ Ω·cm or more. Thus, there becomes a less possibility of the occurrence of a short circuit when a high voltage is applied. Here, the phrase "volume resistivity at 350°C" was measured by a method in accordance with ASTM C657.

The glass film for a capacitor according to the present invention preferably has a liquidus Viscosity of 10^{3.5} dPa·s or more. Here, the term "liquidus viscosity" refers to a value obtained by measuring the viscosity of glass at its liquidus temperature by a platinum sphere pull up method. Further, the term "liquidus temperature" refers to a value obtained by measuring a temperature at which crystals of glass are deposited after glass powders that have passed though a standard 30-mesh sieve (500 µm) and remain on a 50-mesh sieve (300 µm) are placed in a platinum boat and kept in a gradient heating furnace for 24 hours. The liquidus viscosity refers to the Viscosity of glass at the liquidus temperature. Note that, as the liquidus Viscosity of glass is higher and the liquidus temperature is lower, the glass has better devitrification resistance and better formability.

The glass film for a capacitor according to the present invention preferably includes an unpolished surface.

The glass film for a capacitor according to the present invention is preferably formed by an overflow down-draw method. Here, the "overflow down-draw method," also referred to as fusion method, is a production method in which a molten glass is allowed to overflow from both sides of a heat-resistant trough-shaped structure, and the overflown molten glasses are drawn downwardly while making them confluent at the lower end of the trough-shaped structure, to thereby form a glass film.

The glass film for a capacitor according to the present invention is preferably wound so as to have a minimum curvature radius of 500 mm or less. When the glass film is wound so as to have a smaller minimum curvature radius in a wound state, the packing efficiency and transport efficiency of the glass film improve. Note that the term "minimum curvature radius" usually corresponds to the curvature radius of the innermost layer of a wound glass film.

A capacitor according to the present invention includes the above-mentioned glass film for a capacitor.

Ahe glass film according to the present invention preferably has a thickness of 50 µm or less, an average surface roughness Ra of 50 Ǻ or less, a dielectric constant at a frequency of 1 MHz of 5 or more, and a dielectric dissipation factor at a frequency of 1 MHz of 0.005 or less. Note that the technical features of the glass film according to the present invention is the same as that of the glass film for a capacitor according to the present invention as mentioned above.

### Advantageous Effects of Invention

The glass film for a capacitor according to the present invention has a small thickness and a good surface precision, and hence the glass film enables the storage of a large amount of energy in a capacitor, has the feature in that the voltage at which its insulation breakdown occurs is low, and has a small temperature dependence of the dielectric constant. Thus, the glass film for a capacitor according to the present invention can be suitably used in a circuit or the like for EV and HEV.

### Description of Embodiments

The thickness of a glass film for a capacitor according to the present invention is 50 µm or less, preferably 40 µm or less, 30 µm or less, 20 µm or less, 10 µm or less, 8 µm or less, 6 µm or less, 5 µm or less, or 3 µm or less, particularly preferably 1 µm or less. As the thickness of the glass film is smaller, the capacitor using the glass film is more likely to store a large amount of energy. Besides, as the thickness of the glass film is smaller, the weight of a device using the glass film is more likely to be reduced, and the flexibility of the glass film increases, that is, the value of the stress generated when the glass film is bent becomes lower, and hence the glass film can be wound so as to have a smaller curvature radius. Note that, when the glass film is made a laminated structure, the glass film having a smaller thickness can prevent the thickness of the entire structure from becoming larger, easily providing a larger area. As a result, the capacitor using the glass film can store a large amount of energy without the increase of the production cost.

The average surface roughness Ra of the glass film for a capacitor according to the present invention is 50 Ǻ or less, preferably 30 Ǻ or less, 10 Ǻ or less, 8 Ǻ or less, 4 Ǻ or less, or 3 Ǻ or less, or particularly preferably 2 Ǻ or less. If a glass film having a larger average surface roughness Ra is used in a capacitor, there occurs the lowering of the voltage at which insulation breakdown occurs when a high voltage is applied.

The surface roughness Rmax of the glass film for a capacitor according to the present invention is preferably 10 nm or less or 5 nm or less, particularly preferably 3 nm or less. If a glass film having a larger surface roughness Rmax is used in a capacitor, there occurs the lowering of the voltage at which insulation breakdown occurs when a high voltage is applied. Here, the term "surface roughness Rmax" refers to a value obtained by measurement using a method in accordance with JIS B0601:2001.

The glass film for a capacitor according to the present invention preferably has a dielectric constant at a frequency of 1 MHz of preferably 5 or more, 5.5 or more, 6 or more, 7 or more, 8 or more, 9 or more, or 10 or more, particularly preferably 11 or more. If a glass film having a lower dielectric constant is used in a capacitor, it becomes difficult for the capacitor to store a large amount of energy.

The glass film for a capacitor according to the present invention preferably has a dielectric dissipation factor at a frequency of 1 MHz of preferably 0.05 or less, 0.01 or less, 0.008 or less, 0.005 or less, 0.003 or less, or 0.001 or less, particularly preferably 0.0008 or less. If a glass film having a larger dielectric dissipation factor is used in a capacitor, there is a possibility of the lowering of the Voltage at which insulation breakdown occurs when a high voltage is applied.

The glass film for a capacitor according to the present invention preferably has a volume resistivity at 350°C of 108 Ω·cm or more, 10⁹ Ω·cm or more, or 10¹⁰ Ω·cm or more, particularly preferably 10¹¹ Ω·cm or more. I f a glass film having a smaller volume resistivity is used in a capacitor, there is an increased possibility of the occurrence of a short circuit when a high voltage is applied.

The glass film for a capacitor according to the present invention preferably has a liquidus temperature of 1200°C or less, 1150°C or less, 1130°C or less, 1110°C or less, or 1090°C or less, particularly preferably 1070°C or less. Further, the glass film preferably has a liquidus viscosity of preferably 10^{3.5} dPa·s or more, 10^{4.0} dPa·s or more, 10^{4.5} dPa·s or more, 10^{4.8} dPa·s or more, 10^{5.0} dpa·s or more, 10^{5·6} dPa·s or more, or 10^{5.8} dPa·s or more, particularly preferably 10^{6.0} dPa·s or more. Thereby, the glass hardly devitrifies during forming, and hence the glass may easily be formed into a film by an overflow down-draw method. As a result, the surface precision of the glass film can be improved.

1 The glass film for a capacitor according to the present invention preferably has an unpolished surface. The theoretical strength of glass is intrinsically very high, but glass often breaks, in actuality, even by a stress far lower than the theoretical strength. This is because small defects called Griffith flow are generated on the surface of glass in some steps after forming, such as a polishing step. Thus, when the glass film has an unpolished surface, the high mechanical strength that glass intrinsically has is hardly impaired, and consequently, the glass filmbecomes difficult to break. Further, when the glass film has an unpolished surface, the production cost of the glass film can be reduced because a polishing step can be eliminated. Moreover, when the glass film for a capacitor according to the present invention has both surfaces wholly unpolished, the glass film becomes more difficult to break. Besides, in order to prevent the glass film for a capacitor according to the present invention from breaking from a cutting surface of the glass film, chamfering or the like may be given to the cutting surface. Note that forming by an overflow down-draw method can yield an unpolished glass film having a good surface precision.

The glass film for a capacitor according to the present invention is preferably formed by an overflow down-draw method. As a result, an unpolished glass film having a good surface precision can be produced. This is because, when the glass film is produced by the overflow down-draw method, the surfaces of the glass film are formed in the state of a free surface without contacting a trough-shaped refractory. The structure and material of the trough-shaped structure are not particularly limited, as long as a desired size and desired surface precision of the glass film can be realized. Further, a means for applying force to the glass film to perform a down-draw process is not particularly limited, as long as a desired size and desired surface precision of the glass film canbe realized. For example, there maybe employed a means involving rotating a heat-resistant roll having a sufficiently large width while being in contact with the glass film, to thereby draw the glass film, or a means involving allowing a plurality of pairs of heat-resistant rolls to come into contact with only the vicinity of end surfaces of the glass film, to thereby draw the glass film.

When the glass film for a capacitor according to the present invention is formed by the overflow down-draw method, it is preferred that the temperature of glass be adjusted so that the viscosity of the glass is 10^{3.5} to 10^{5.0} dPa·s immediately below the lower end of the trough-shaped structure (portion at which non-contact of the glass with the trough-shaped structure starts) . If no external force is applied, the molten glass confluent at the lower end of the trough-shaped structure falls downward while shrinking due to surface tension thereof. In order to prevent such the phenomenon, it is necessary to hold both sides of the glass with roller members or the like to draw the glass in the film width direction so that the glass does not shrink. However, when the glass film is formed, the cooling speed of the glass becomes drastically faster immediately after the glass departs from the trough-shaped structure, and consequently, it becomes difficult to broaden the film width. This is attributed to the fact that heat quantity of the glass overflowing from both sides of the trough-shaped structure is small. In view of the foregoing, the viscosity of glass immediately below the lower end of the trough-shaped structure is preferably kept low to some degree. Specifically, the viscosity is adjusted to preferably 10^{5.0} dPa·s or less, 10^{4.8} dPa·s or less, 10^{4.6} dPa·s or less, 10^{4.4} dPa·s or less, or 10^{4.2} dPa·s or less, particularly preferably 10^{4.0} dPa·s or less. As a result, a tensile stress can be imparted to the glass in the film width direction, and hence the film width can be easily broadened without the break of the film, and the drawing downwardly can be easily performed. On the other hand, if the viscosity of glass is too low immediately below the lower end of the trough-shaped structure, the glass is liable to deform, thereby quality of the glass in view of warpage, waviness and the like is liable to be lowered. Thus, the viscosity of glass immediately below the lower end of the trough-shaped structure is adjusted to preferably 10^{3.5} dPa·s or more, 10^{3.7} dPa·s or more, or 10^{3.8} dPa·s or more, particularly preferably 10^{3.9} dPa·s or more.

It is possible to employ various methods in addition to the overflow down-draw method for forming the glass film for a capacitor according to the present invention. For example, a slot down-draw method, a redraw method, and the like can be employed.

The glass film for a capacitor according to the present invention is preferably wound so as to have, in its wound state, a minimum curvature radius of 500 mm or less (more preferably 300 mm or less, 150 mm or less, 100 mm or less, 70 mm or less, or 50 mm or less, particularly preferably 30 mm or less). When the glass film is wound so as to have a smaller minimum curvature radius in its wound state, the packing efficiency and transport efficiency of the glass film improve. Further, as described above, it is difficult for conventional ceramic materials to provide a larger area, and the fact is one of the factors for increasing the cost. Thus, when the glass film is wound so as to have a smaller minimum curvature radius, thereby yielding a compact wound structure, a larger area can be easily provided, and hence the capacitor using the glass film can store a large amount of energy without the increase of its production cost.

The density of the glass film for a capacitor according to the present invention is preferably 4.5 g/cm³ or less, 4.2 g/cm³ or less, 4.0 g/cm³ or less, 3.7 g/cm³ or less, 3.6 g/cm³ or less, 3.4 g/cm³ or less, 3.3 g/cm³ or less, 3.0 g/cm³ or less, 2.8 g/cm³ or less, 2.5 g/cm³ or less, particularly preferably 2.4 g/cm³ or less. As the density becomes lower, the weight of the device can be made lighter. Here, the term "density" refers to a value obtained by measurement using a well-known Archimedes method.

The thermal expansion coefficient of the glass film for a capacitor according to the present invention is preferably 25 to 120×10⁻⁷/°C, 30 to 120×10⁻⁷/°C, 40 to 110×10⁻⁷/°C, 60 to 100×10⁻⁷/°C, or 70 to 95×10⁻⁷/°C. Thereby, the thermal expansion coefficient of the glass film is likely to be compatible with the thermal expansion coefficient of each of various metal films formed on the glass film, and hence the warpage or the like of each metal film can be prevented. Here, the term "thermal expansion coefficient" refers to an average value of the values obtained by measurement with a dilatometer in the temperature range of 30 to 380°C.

In the glass film for a capacitor according to the present invention, the temperature at a viscosity of 10^{2.5} dPa·s is preferably 1570°C or less, 1550°C or less, 1450°C or less, 1350°C or less, 1300°C or less, or 1270°C or less, particularly preferably 1250°C or less. When the temperature at a viscosity of 10^{2.5} dPa·s is lower, melting of the glass at a low temperature becomes easier, and the glass film can be produced at a lower cost. Here, the phrase "temperature at 10^{2.5} dPa·s" refers to a value obtainedbymeasurement using the platinum sphere pull up method.

The glass film for a capacitor according to the present invention preferably contains, in terms of mass%, 20 to 70% of SiO₂, 0 to 20% of Al₂O₃, 0 to 17% of B₂O₃, 0 to 10% of MgO, 0 to 15% of CaO, 0 to 15% of SrO, and 0 to 40% of BaO as a glass composition. As a result of controlling the range of the glass composition as described above, the various characteristics described above can be obtained. The reasons why the content of each component has been limited as described above are described below.

The content of SiO₂ is 20 to 70%. If the content of SiO₂ is larger, the meltability and the formability lower. Thus, the content of SiO₂ is preferably 65% or less, 60% or less, 58% or less, 55% or less, or 50% or less, particularly preferably 45% or less. On the other hand, if the content of SiO₂ is smaller, the network structure of glass becomes difficult to be formed, leading to difficulty in vitrification, and the dielectric dissipation factor easilybecomes higher. Thus, the content of SiO₂ is preferably 25% or more, particularly preferably 30% or more.

The content of Al₂O₃ is 0 to 20%. If the content of Al₂O₃ is larger, devitrified crystal is liable to be deposited in glass, and the liquidus viscosity is liable to lower. Thus, the content of Al₂O₃ is preferably 18% or less or 17.5% or less, particularly preferably 17% or less. On the other hand, if the content of Al₂O₃ is smaller, the composition of glass loses its balance, and hence the glass is liable to devitrify. Thus, the content of Al₂O₃ is preferably 1% or more or 3% or more, particularly preferably 5% or more.

The content of B₂O₃ is 0 to 17%. If the content of B₂O₃ is larger, the dielectric constant is liable to lower, the heat resistance lowers, and the reliability of the capacitor when being exposed to high temperature is liable to lower. Thus, the content of B₂O₃ is preferably 15% or less, 13% or less, 11% or less, 7% or less, or 4% or less, particularly preferably 1% or less.

MgO is a component for increasing the strain point and lowering the viscosity. However, if the content of MgO is too large, the dielectric dissipation factor, the liquidus temperature, the density, and the thermal expansion coefficient become too high. Thus, the content of MgO is preferably 10% or less, 5% or less, 3% or less, 2% or less, 1.5% or less, or 1% or less, particularly preferably 0.5% or less.

The content of CaO is 0 to 15%. If the content of CaO is larger, the dielectric dissipation factor, the density, and the thermal expansion coefficient become higher. Besides, the composition of glass loses its component balance, and hence the devitrification resistance is liable to lower. Thus, the content of CaO is preferably 12% or less, 10% or less, or 9% or less, particularly preferably 8.5% or less. On the other hand, if the content of CaO is smaller, the dielectric constant and the meltability is liable to lower. Thus, the content of CaO is preferably 0.5% or more, 1% or more, 2% or more, or 3% or more, particularly preferably 5% or more.

The content of SrO is 0 to 15%. If the content of SrO is larger, the dielectric dissipation factor, the density, and the thermal expansion coefficient is liable to be higher. Thus, the content of SrO is preferably 12% or less. On the other hand, if the content of SrO is smaller, the dielectric constant and the meltability is liable to lower. Thus, the content of SrO is preferably 0.5% or more, 1% or more, 2% or more, or 3% or more, particularly preferably 3.5% or more.

The content of BaO is 0 to 40%. If the content of BaO is larger, the dielectric dissipation factor, the density, and the thermal expansion coefficient is liable to be higher. Thus, the content of BaO is preferably 35% or less. On the other hand, if the content of BaO is smaller, the dielectric constant lowers, and it becomes difficult to suppress the devitrification. Thus, the content of BaO is preferably 0.5% or more, 1% or more, 2% or more, 5% or more, 10% or more, 15% or more, or 20% or more, particularly preferably 25% or more.

MgO, CaO, SrO, andBaO are each a component for increasing the dielectric constant, and when glass contains a mixture thereof, the liquidus temperature remarkably lowers, and hence crystal inclusion is hardly generated in the glass and the meltability and the formability improve. However, if the content of MgO+CaO+SrO+BaO (the total content of MgO, CaO, SrO, and BaO) is smaller, it becomes difficult to increase the dielectric constant, and moreover, these components cannot sufficiently act as a melting accelerate component, resulting in the lowering of the meltability. Thus, the content of MgO+CaO+SrO+BaO is preferably 5% or more, 10% or more, 15% or more, 20% or more, or 25% or more, and particularly preferably 30% or more. On the other hand, if the content of MgO+CaO+SrO+BaO is larger, the dielectric dissipation factor becomes higher, the density rises, leading to the difficulty in reducing the weight. Besides, the composition of glass loses its component balance, and hence the devitrification resistance is liable to lower. Thus, the content of MgO+CaO+SrO+BaO is preferably 60% or less or 55% or less, particularly preferably 50% or less.

Further, in addition to the above-mentioned components, for example, the following components can be added to a glass composition in an amount of up to 40%.

Li₂O, Na₂O, and K₂O are each a component for lowering the viscosity and adjusting the thermal expansion coefficient. However, if Li₂O, Na₂O, and K₂O are each contained in a large amount, the voltage at which insulation breakdown occurs lowers. Further, the temperature characteristics of the dielectric constant tend to lower. Thus, the total content of Li₂O, Na₂O, and K₂O is preferably 15% or less, 10% or less, 5% or less, 2% or less, 1% or less, or 0.5% or less, particularly preferably 1000 ppm or less.

ZnO is a component for increasing the dielectric constant without greatly increasing the dielectric dissipation factor, and a component for increasing the meltability. However, if ZnO is contained in a large amount, glass is liable to devitrify and its density tends to rise. Thus, the content of ZnO is preferably 0 to 40%, 0 to 30%, 0 to 20%, or 0.5 to 15%, particularly preferably 1 to 10%.

ZrO₂ is a component for increasing the dielectric constant without greatly increasing the dielectric dissipation factor. However, if ZrO₂ is contained in a large amount, the liquidus temperature sharply rises, and devitrified inclusion of zircon is liable to deposit. Thus, the upper limit range of ZrO₂ is preferably 20% or less or 15% or less, particularly preferably 10% or less. Further, the lower limit range of ZrO₂ is preferably 0.1% or more, 0.5% or more, 1% or more, or 2% or more, particularly preferably 3% or more.

Y₂O₃, Nb₂O₃, and La₂O₃ can each be added in an amount of up to 20%. Each of those components has a function of increasing the dielectric constant and the like. However, if each of them is contained in a large amount, the dielectric dissipation factor and the density are likely to rise.

As a fining agent, one kind or two or more kinds selected from the group consisting of As₂O₃, Sb₂O₃, CeO₂, SnO₂, F, Cl, and SO₃ may be added in an amount of 0 to 3%. From the standpoint of environment, it is necessary to refrain as much as possible from the use of As₂O₃, Sb₂O₃, or F, particularly As₂O₃ or Sb₂O₃, and the content thereof is preferably less than 0.1%. From the standpoint of environment, SnO₂, Cl, and SO₃ are preferred as the fining agent. The content of SnO₂+Cl+SO₃ (the total content of SnO₂, Cl, and SO₃) is preferably 0.001 to 1% or 0.01 to 0.5%, particularly preferably 0.01 to 0.3%. Further, the content of SnO₂ is preferably 0 to 1% or 0.01 to 0.5%, particularly preferably 0.05 to 0.4%.

The glass film according to the present invention can be produced by blending raw glass materials so as to attain a desired glass composition, then melting the raw glass materials, and forming the molten glass into a film.

An electrode maybe formed on one surface or both surfaces of the glass film for a capacitor according to the present invention. It is possible to use, as an electrode member, a member containing one kind or two or more kinds selected from the group consisting of Al, Pt, Ni, Cu, and the like. Further, when an electrode is formed on the surface of the glass film in the forming step of the glass film, followed by performing the step of winding the glass film, the production costs can be reduced. Note that it is also possible to form a resin layer on one surface or both surfaces of the glass film for a capacitor according to the present invention.

### Examples

Hereinafter, the present invention is described in detail based on examples.

Tables 1 and 2 show examples of the present invention (Sample Nos. 1 to 10).

**[Table 1]**

| | | Example | | | | |
|---|---|---|---|---|---|---|
| | | No. 1 | No. 2 | No. 3 | No. 4 | No. 5 |
| Glass composition (mass%) | SiO₂ | 42.0 | 47.0 | 42.0 | 42.0 | 42.0 |
| | Al₂O₃ | 5.0 | 5.0 | 5.0 | 5.0 | 5.0 |
| | B₂O₃ | 4.0 | 4.0 | 9. 0 | 4.0 | 4.0 |
| | CaO | 5.8 | 5.8 | 5.8 | 5.8 | 5.8 |
| | SrO | 10.0 | 10.0 | 10.0 | 15.0 | 10.0 |
| | BaO | 33.0 | 28.0 | 28.0 | 28.0 | 28.0 |
| | ZnO | - | - | - | - | 5.0 |
| | SnO₂ | 0.2 | 0.2 | 0.2 | 0.2 | 0.2 |
| Film thickness (µm) | | 10 | 10 | 10 | 10 | 10 |
| Ra (Å) | | 2 | 2 | 2 | 2 | 2 |
| Rmax (nm) | | 2 | 2 | 2 | 2 | 2 |
| ρ (g/cm³) | | 3.41 | 3.25 | 3.26 | 3.39 | 3.38 |
| Ps (°C) | | 632 | 637 | 624 | 632 | 623 |
| Ta (°C) | | 672 | 677 | 660 | 671 | 662 |
| Ts (°C) | | 820 | 833 | 795 | 818 | 812 |
| 10⁴ dPa·s (°C) | | 1018 | 1057 | 979 | 1015 | 1012 |
| 10³ dPa·s (°C) | | 1120 | 1171 | 1075 | 1116 | 1116 |
| 10^{2.5} dPa·s (°C) | | 1189 | 1251 | 1140 | 1184 | 1187 |
| α (×10⁻⁷/°C) | | 80 | 74 | 74 | 82 | 77 |
| TL (°C) | | 1001 | 982 | 953 | 1043 | 980 |
| logηTL (dPa·s) | | 4.2 | 4.9 | 4.4 | 3.7 | 4.4 |
| Dielectric constant at 1 MHz | | 8.4 | 8.5 | 8.4 | 11.2 | 5.3 |
| Dielectric dissipation factor at 1 MHz | | 0.0006 | 0.0008 | 0.0008 | 0.0007 | 0.0005 |
| Volume resistivity [350°C] (Ω.cm) | | 10^{12.5} | 10^{11.7} | 10^{11.5} | Not measured | 10¹² |
| Insulation breakdown voltage | | ○ | ○ | ○ | ○ | ○ |

**[Table 2]**

| | | Example | | | | |
|---|---|---|---|---|---|---|
| | | No.6 | No.7 | No.8 | No.9 | No.10 |
| Glass composition (mass) | SiO₂ | 42.0 | 42.0 | 42.0 | 34.9 | 60.0 |
| | Al₂O₃ | 5.0 | 2.0 | - | 1.6 | 16.0 |
| | B₂O₃ | 4.0 | 4.0 | 6.0 | - | 10.0 |
| | MgO | - | 3.0 | 3.0 | - | 1.0 |
| | CaO | 5.8 | 5.8 | 5.8 | 5.8 | 8.0 |
| | SrO | 10.0 | 10.0 | 10.0 | 4.8 | 5.0 |
| | BaO | 28.0 | 33.0 | 33.0 | 26.9 | - |
| | TiO₂ | - | - | - | 9.6 | - |
| | Nb₂O₅ | - | - | - | 9.3 | - |
| | La₂O₃ | - | - | - | 3.9 | - |
| | ZrO₂ | 5.0 | - | - | 3.2 | - |
| | SnO₂ | 0.2 | 0.2 | 0.2 | - | - |
| Film thickness (Å) | | 10 | 10 | 10 | 10 | 10 |
| Ra (Å) | | 2 | 2 | 2 | 2 | 2 |
| Rmax (nm) | | 2 | 2 | 2 | 2 | 2 |
| ρ (g/cm³) | | 3.37 | 3.44 | 3.44 | 3.73 | 2.46 |
| Ps (°C) | | 656 | 623 | 618 | 700 | 654 |
| Ta (°C) | | 698 | 662 | 654 | 744 | 709 |
| Ts (°C) | | 856 | 805 | 788 | 876 | 944 |
| 10⁴ dPa·s (°C) | | 1068 | 989 | 958 | 1032 | 1268 |
| 10³ dPa·s (°C) | | 1173 | 1081 | 1044 | 1108 | 1428 |
| 10^{2.5} dPa·s (°C) | | 1241 | 1143 | 1101 | 1158 | 1532 |
| α (×10⁻⁷/°C) | | 74 | 84 | 85 | 79 | 38 |
| TL (°C) | | 1008 | <980 | <960 | 1031 | 1084 |
| logηTL (dPa·s) | | 4.8 | >4.1 | >4.0 | 4.0 | 5.3 |
| Dielectric constant at 1 MHz | | 8.4 | 8.5 | 8.4 | 11.2 | 5.3 |
| Dielectric dissipation factor at 1 MHz | | 0.0006 | 0.0008 | 0.0008 | 0.0007 | 0.0005 |
| Volume resistivity [350°C] (Ω.cm) | | 10^{12.5} | 10^{11.7} | 10^{11.s} | Not measured | 10¹² |
| Insulation breakdown voltage | | ○ | ○ | ○ | ○ | ○ |

First, raw glass materials were blended so that the glass compositions listed in the tables are obtained, and then each of the glass batches thus obtained was fed in a glass melting furnace and melted at 1500 to 1600°C. Next, the molten glass was fed in an overflow down-draw forming apparatus and formed into a glass film having a width of 1000 mm and a thickness of 10 µm. Each of the glass films thus obtained was evaluated for its characteristics. Tables 1 and 2 show the results.

The average surface roughness Ra and the surface roughness Rmax are values each obtained by measurement with a method in accordance with JIS B0601:2001.

The density ρ is a value obtained by measurement using a well-known Archimedes method.

The strain point Ps and the annealing point Ta are values obtained by measurement based on the method according to ASTM C336-71.

The softening point Ts is a value obtainedbymeasurement based on the method according to ASTM C338-93.

The temperatures at 10^{4.0} dPa·s, 10^{3.0} dPa·s, and 10^{2.5} dPa·s are values obtained by measurement using the platinum sphere pull up method.

The thermal expansion coefficient α is an average value of the values obtained by measurement with a dilatometer in the temperature range of 30 to 380°C. Note that there was used, as a measurement sample, a sample produced by placing a plurality of glass films in a platinum boat, followed by remelting at 1400 to 1450°C for 30minutes, and then processing the glass into a cylindrical glass rod (having R processing at end faces) having a size of 5 mm in diameter by 20 mm in length.

The liquidus temperature TL is a value obtained by measuring a temperature at which crystals of glass are deposited after glass powders that have passed though a standard 30-mesh sieve (500 µm) and remain on a 50-mesh sieve (300 µm) are placed in a platinum boat and kept in a gradient heating furnace for 24 hours.

The liquidus viscosity logηTL is a value obtained by measuring the viscosity of glass at its liquidus temperature by the platinum sphere pull up method.

The dielectric constant and the dielectric dissipation factor are values each obtained by measurement using the method in accordance with ASTM D150.

The volume resistivity is a value obtainedbymeasurement using the method in accordance with the method of ASTM C657.

The value of the insulation breakdown voltage was obtained by forming an Al electrode (having a thickness of 200 nm and an area of 0.75 cm²) on the glass film, connecting the electrode to a dielectric strength meter, and then performing measurement in a liquid (PF-5058) manufactured by Sumitomo 3M Limited. Identical measurement was performed ten times per each sample, and when a sample showed that the average value of the voltages at which insulation breakdown occurred was 10⁹[V/m] or more, the evaluation of the sample was represented by a symbol "O", and when a sample showed that the average value was 10⁵ to 10⁸ [V/m], the evaluation of the sample was represented by a symbol "×".

## Claims

1. A glass film for a capacitor, the glass film having a thickness of 50 µm or less and an average surface roughness Ra of 50 Ǻ or less.

2. The glass film for a capacitor according to claim 1, wherein the glass film comprises alkali metal oxides at a content of 15 mass% or less.

3. The glass film for a capacitor according to claim 1 or 2, wherein the glass film has a dielectric constant at a frequency of 1 MHz of 5 or more.

4. The glass film for a capacitor according to any one of claims 1 to 3, wherein the glass film has a dielectric dissipation factor at a frequency of 1 MHz of 0.05 or less.

5. The glass film for a capacitor according to any one of claims 1 to 4, wherein the glass film has a volume resistivity at 350°C of 10⁸ Ω·cm or more.

6. The glass film for a capacitor according to any one of claims 1 to 5, wherein the glass film has a liquidus viscosity of 10^{3.5} dPa·s or more.

7. The glass film for a capacitor according to any one of claims 1 to 6, wherein the glass film has an unpolished surface.

8. The glass film for a capacitor according to any one of claims 1 to 7, wherein the glass film is formed by an overflow down-draw method.

9. The glass film for a capacitor according to any one of claims 1 to 8, wherein the glass film is wound so as to have a minimum curvature radius of 500 mm or less.

10. A capacitor, comprising the glass film for a capacitor according to any one of claims 1 to 9.

11. A glass film, having a thickness of 50 µm or less, an average surface roughness Ra of 50 Ǻ or less, a dielectric constant at a frequency of 1 MHz of 5 or more, and a dielectric dissipation factor at a frequency of 1 MHz of 0.005 or less.
